# EUROPEAN PATENT APPLICATION

(11) **EP 3 023 889 A1**
(43) Date of publication of application: **25.05.2016**
(21) Application number: 14306864.1
(22) Date of filing: 24.11.2014
(51) Int. Cl.: G06F 17/30

(54) **Method and device for searching for content**

(71) Applicant: Thomson Licensing, 92130 Issy-les-Moulineaux (FR)
(72) Inventor: Babon, Frédéric, 35576 Cesson-Sévigné (FR); Vigouroux, Jean-Ronan, 35576 Cesson-Sévigné (FR); Sirot, Joël, 35576 Cesson-Sévigné (FR)
(74) Representative: Perrot, Sébastien

(57) **Abstract**

It is proposed a method for searching for at least one video content, comprising steps of extracting (S300) at least one graphical object from a graphical database; composing (S310) a graphical scene by using the at least one graphical object; and searching (S315) for the at least one video contents based on the graphical scene.

## Description

### TECHNICAL FIELD

The present disclosure relates to data searching, particularly to a method and an apparatus for searching for content.

### BACKGROUND

Currently, Query by Visual Example (QVE) is often used in video content retrieval without semantic problems that can appear in keyword based retrieval, and QVE techniques are mainly classified into two groups: photo-real based query, for example, J. Sivic et A. Zisserman (2003). Video google: a text retrieval approach to object matching in videos. Dans ICCV (pp. 1470, 1477) and motion-sketch query, for example, Rui Hu et John Collomosse (2010). Motion-sketch based Video Retrieval using a Trellis Levenshtein Distance. 2010 International Conference on Pattern Recognition and J. P. Collomosse, G. McNeill et Y. Qian (2009). Storyboard sketches for content based video retrieval. Dans ICCV. Compared to the photo-real based query, the motion-Sketch query can address the issue that exemplar footage is absent in use cases; however the motion-sketch query needs the user to draw a recognizable sketch firstly, and then the retrieval of the video contents is performed by using the recognizable sketch. Therefore, the motion-sketch query raises higher requirements on the user's capability of drawing a recognizable sketch by hand, and the result of the retrieval depends on the freehand sketch drawn by the user greatly.

### SUMMARY

According to an embodiment of the present disclosure, it is proposed a solution to improve the existing QVE techniques, wherein the solution consists in that the user composes a desired graphical scene by using existing graphical objects extracted from a database, and that the user can retrieve one or more video contents based on the composed graphical scene. In such a way, the user can depict the graphical scene freely according to the mental representation of a targeted graphical scene even if such a graphical scene does not exist in real photos, without requiring the user to draw a recognizable sketch of the targeted graphical scene by hand.

According to one aspect of the present disclosure, it is proposed a method for searching for at least one video content, comprising steps of extracting (S300) at least one graphical object from a graphical database; composing (S310) a graphical scene by using the at least one graphical object; and searching (S315) for the at least one video contents based on the graphical scene.

According to another aspect of the present disclosure, it is proposed a device for searching for at least one video content, comprising an extract unit (500) configured to extract at least one graphical object from a graphical database; a composition unit (510) configured to compose a graphical scene by using the at least one graphical object; and a searching unit (515) configured to search for the at least one video contents based on the graphical scene.

According to another aspect of the present disclosure, it is proposed a computer program product downloadable from a communication network and/or recorded on a medium readable by computer and/or executable by a processor, comprising program code instructions for implementing the steps of above method.

According to another aspect of the present disclosure, it is proposed a Non-transitory computer-readable medium comprising a computer program product recorded thereon and capable of being run by a processor, including program code instructions for implementing the steps of above method.

These and other aspects, features and advantages of the present principle will become apparent from the following detailed description of exemplary embodiments, which is to be read in connection with the accompanying drawings.

### BRIEF DESCRIPTION OF THE DRAWINGS

The present principle may be better understood when reading the description as follows in accordance with the following exemplary figures, in which:
Fig. 1 illustrates an example of the present disclosure, in which in response to a request from the user for extracting a graphical object, a slider is displayed to indicate a level of generality of a category comprising a group of graphical objects which are similar to the graphical object to be extracted;
Fig. 2a-2i illustrates an example of the present disclosure to show how a targeted graphical scene is composed by a plurality of graphical objects extracted from a graphical database;
Fig. 3 illustrates a flow of a method for searching video contents based on graphical scene composition according to an embodiment of the disclosure;
Fig. 4 further illustrates the flow of the method in Fig. 3 according to an example of the disclosure; and
Fig. 5 illustrates a device for implementing the method of Figs. 3 and 4 according to an embodiment of the disclosure.

### DETAILED DESCRIPTION

To illustrate the technical solutions of the present principle clearly and fully, hereinafter, detailed description will be made to the embodiments of the present principle in connection with the accompanying drawings. It should be appreciated that those skilled in the art will be able to devise various arrangements that, although not explicitly described or shown herein, embody the inventive concept of the present principle and are included within its scope.

According to the present principle, it is proposed a method for searching one or more pieces of contents (including video contents) based on a graphical scene created by the user, wherein the graphical scene can comprise several graphical objects, such as images, static 3D objects, "visual concepts", and the like. Herein, the term of "visual concepts" refers to a concept described by an image.

According to an embodiment of the present disclosure, based on the mental representation or mental conception of a targeted graphical scene, the user firstly extracts from a graphical database the graphical objects to be presented in the target graphical scene. In the graphical database, each graphical object is associated with one or more keywords for the purpose of searching. In this regard, for each of the graphical object, the user can enter a keyword or import an image (which is used by image searching/retrieval engine) to perform the retrieval of the graphical object so that similar graphical objects in the graphical database can be provided to the user in real time. The retrieval can be based on a big image retrieval engine, e.g., the google image retrieval engine, to retrieve enough examples of the graphical objects based on the user's queries.

Further, the user can also use a "named concept" to retrieve examples of the graphical objects. The term of "named concept" includes two or more keywords. The two or more keywords represent a keyword chain that can be used if the user cannot find any graphical objects that look like the graphical objects to be extracted. For example, the named concept might be "White horse" or "little boat".

In the existing QVE techniques, there is always an ambiguity when importing an image to be used as query content. For example, if the user imports an image of a dog or a boat into the image retrieval engine, the image retrieval engine does not know whether the user is looking for a specific instance of a dog or a boat, which is imported, or the user is looking for a dog or a boat in general, or even an four-legged animal or a mode of transportation.

To address the above issue, according to an embodiment of the present disclosure, it is proposed attaching to each concept, e.g., a visual concept or named concept, a slider that indicates level of generality, e.g., instance, class, super-class, on which the graphical object to be extracted belongs to. Optionally, the level of generality can be visually displayed to the user when the user enters a keyword for a graphical object, e.g., "Labrador", or the user imports an image of a Labrador dog into the image retrieval engine.

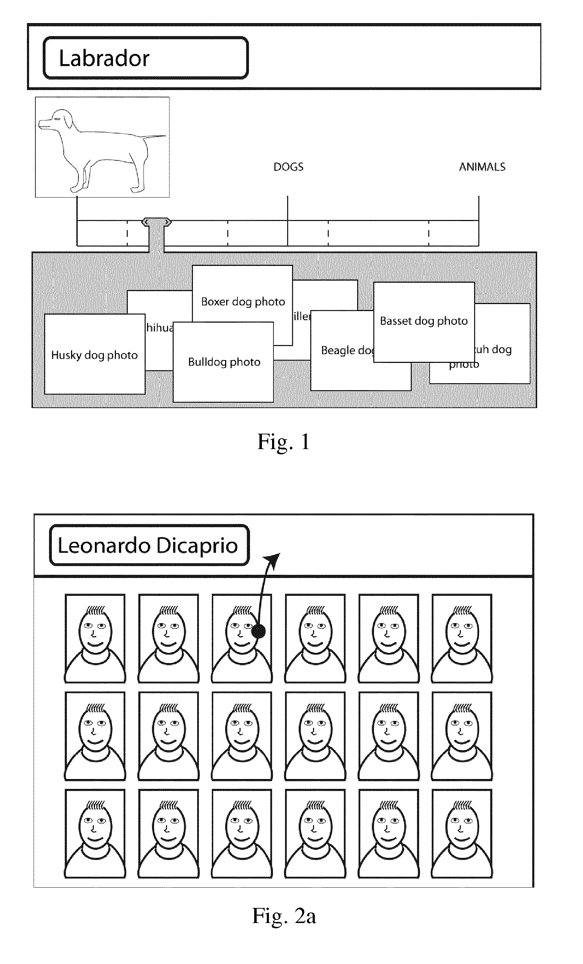

As illustrated in Fig. 1, after the user enters the keyword of "Labrador" or imports an image of a Labrador dog", the images or photos of various dogs are displayed at the bottom of the slider for selection. When the slider is moved from the left to the right, the level of generality is changed from a specific instance to an abstract class. For example, from a specific instance (e.g., Husky dog) to global classes (e.g., dogs, animals). Optionally, a discrete or a continuous selection can be implemented in the image retrieval.

When the slider is displayed on a screen, e.g. on a touch screen interface, such as a Tablet, the user is provided with the level of generality of graphical objects same (identical) as or similar to a targeted graphical object to be extracted, as shown in Fig. 1. The user can specify the level of generality of a graphical object to be added to the targeted graphical scene. As mentioned above, the slider permits the user to select a level ranging from the very specific instance to super classes. At the bottom of the screen, the user can see instances of the examples that represent the currently selected level of generality. As illustrated in Fig. 1, when the user specifies the level of the generality and enters the keyword of "Labrador" or imports an image of a Labrador dog, the photos of Husky dog, Bulldog, Boxer dog, Basset dog, and the like might be displayed on the screen.

If the user desires to change the level of the generality, he can move the slider, and changes the photos displayed on the screen accordingly.

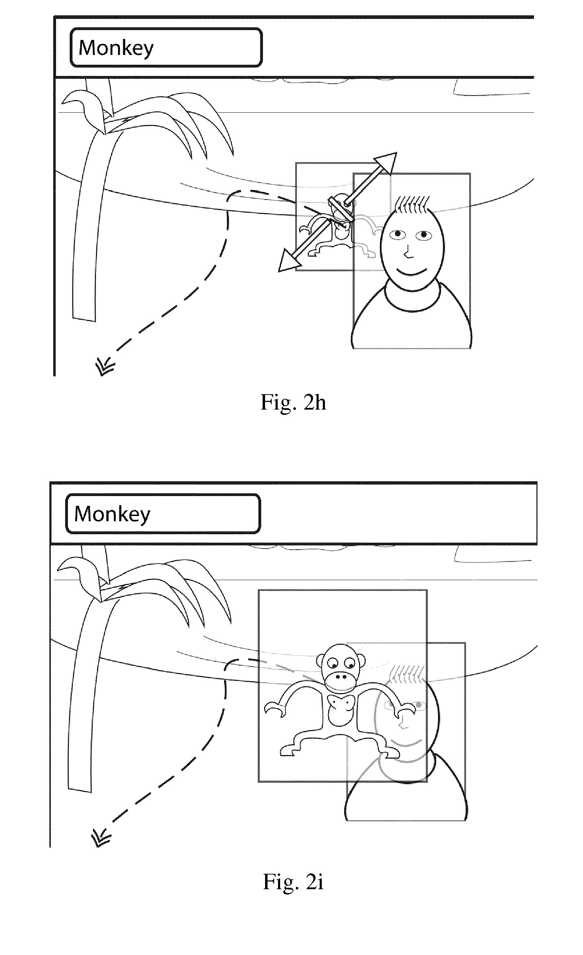

Then, the user can select appropriate graphical objects from those displayed on the bottom of the screen as the graphical objects to be added to the targeted graphical scene. Based on a selection result, the user can put the selected graphical objects on a scene and organize them. For example, as illustrated in Fig. 2a, when the user inputs the keyword of "Leonardo DiCaprio", a plurality of photos relevant to "Leonardo DiCaprio" are displayed on the screen. Then, the user can select one of these as a graphical object to be added to the targeted graphical scene.

For each of the graphical objects added to the graphical scene, the user can set the properties of the graphical objects to customize these graphical objects as desired. For instance, the user can resize the graphical object, change the color of the graphical object, clip the graphical object, and the like. Further, for static 3D objects, the user can set a good orientation of the graphical object before adding it to the graphical scene. Optionally, a flag can also be arranged to indicate whether the orientation is set or not.

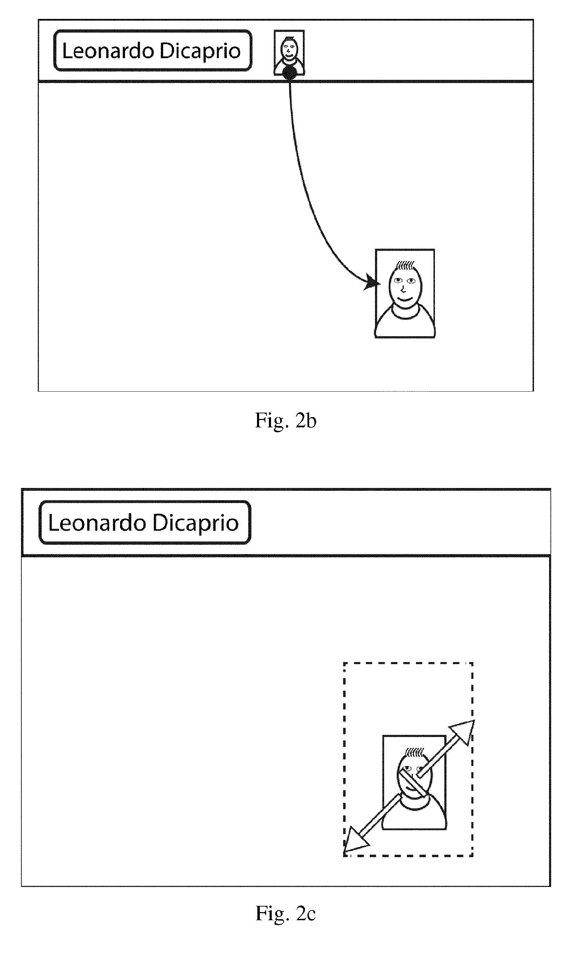

To position each of the graphical objects in the graphical scene, which are selected from those displayed on the screen, the user can drag & drop the graphical objects. For example, as shown in Fig. 2b, the user can place the selected graphical object, i.e., the photo of "Leonardo DiCaprio", on the graphical scene by a drag & drop gesture. Optionally, as mentioned above, the user can set an orientation of a static 3D object according to his preferences. As shown in Fig. 2c, the user can also use a "pinch" gesture to specify an apparent size of the graphical object so that the distance from the graphical object to a camera can be changed accordingly.

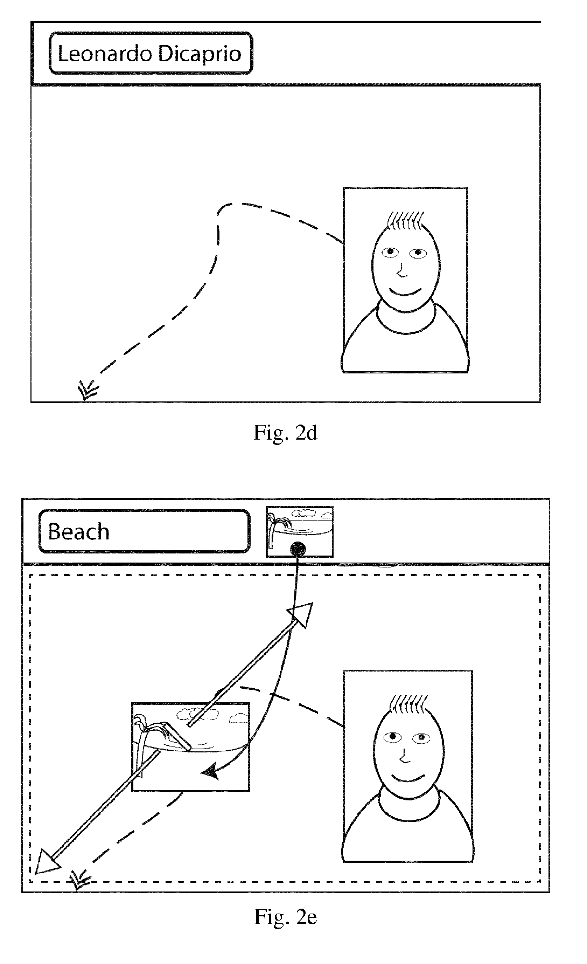

Optionally, the user can set a movement of the graphical object. In this regard, a motion vector can be used to specify a desired movement of the graphical object. As illustrated in Fig. 2d, the user can long press on the graphical object with his finger to activate a motion vector, then without releasing his finger, the user can draw a motion vector to indicate the desired movement. In an example, this motion vector that describes the movement of the graphical object does not include information on duration of the movement. Optionally, it can be assumed that a specified movement may last from 1 second to 30 seconds, for example, to reduce searching computation.

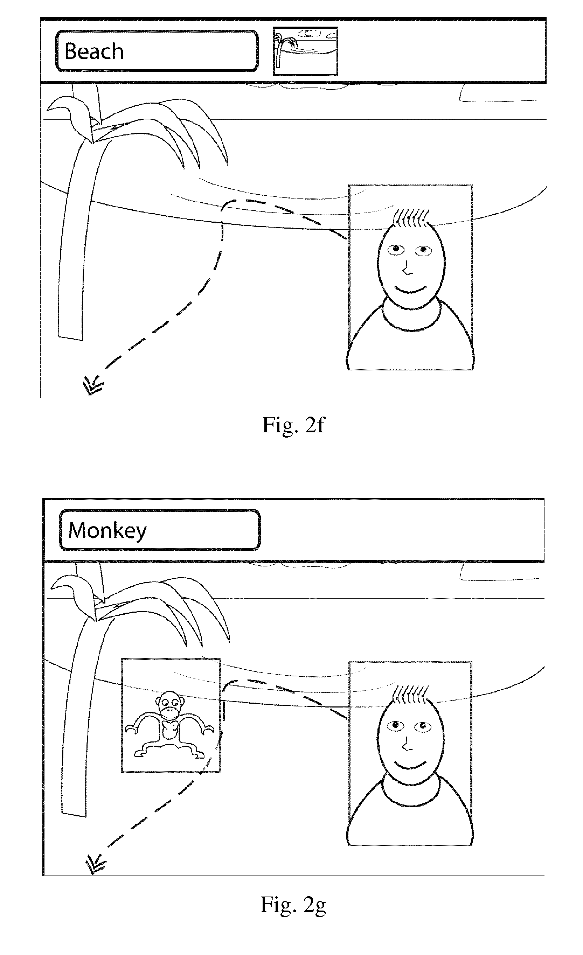

In general, as a targeted graphical scene, it needs a background image as an environment where the scene takes place. In an example of an embodiment of the disclosure, the user can set a selected graphical object as a background image of the targeted graphical scene. As shown in Fig. 2e, the user desires to set the environment of the targeted scene as a beach. The user enters a keyword of "beach" or imports an image of "beach" into the image retrieval engine, as discussed above, a plurality of photos relevant to "beach", together with a slider which indicates the level of the generality, are displayed on the screen (not shown in Fig. 2e); the user selects one of the plurality of the photos as displayed and places the same on the graphical scene; the user can use a "pinch" gesture to maximize the selected graphical object, i.e., the selected photo of "beach" to cover the entire scene. In such a way, the photo of "beach" is set as the background image of the targeted graphical scene, and thus the environment of the targeted scene is specified as a beach. As shown in Fig. 2f, the background image of the targeted graphical scene is in place.

Further, the user can add other graphical objects to the targeted graphical scene. For example, as shown in Fig. 2g, the user can add a static object to better depict the targeted graphical scene. In this example, the user can retrieve and select an image of monkey by adopting the approach as discussed above, and the details are omitted for the purpose of conciseness. When the user places the image of monkey in the targeted graphical scene, the user can edit the image of monkey, such as resizing the image, changing the color of the image, clipping the image, and the like. As shown in Figs. 2h-2i, the user can resize the image and send the resized image to a foreground of the graphical scene.

Similar to the above procedures, the user can add other graphical objects to the graphical scene to compose the targeted graphical scene until the entire graphical scene is created completely. In such a way, the user can obtain a composed scene which matches his wish. Then, the user can perform video content retrieval by using the composed scene.

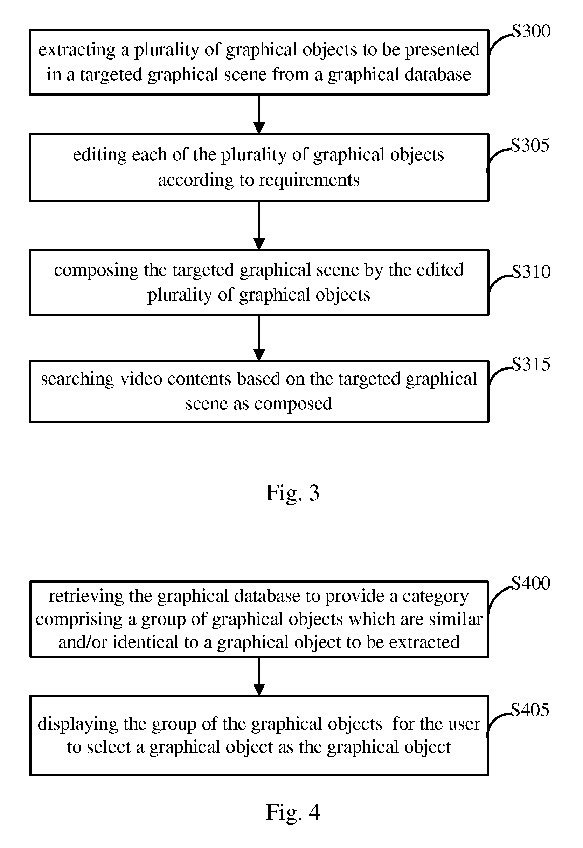

Fig. 3 illustrates a flow of a method for searching video contents based on a graphical scene composition. As shown in Fig. 3, the method can comprise: at step S300, extracting a plurality of graphical objects to be presented in a targeted graphical scene from a graphical database; at step S305, editing each of the plurality of graphical objects according to the requirements; at step S310, composing the targeted graphical scene by the edited plurality of graphical objects; and finally, at step S315, searching video contents based on the targeted graphical scene as composed.

In an example, as shown in Fig. 4, the method can further comprise: at step S400, in response to a request from a user for extracting a graphical object, retrieving the graphical database to provide a category comprising a group of graphical objects which are similar and/or identical to the graphical object; and at step S405, displaying the group of the graphical objects for the user to select a graphical object as the graphical object to be extracted.

Optionally, the method can further comprise: providing a slider to indicate a level of generality of the category; and changing the level of generality of the category from a specific instance to an abstract class with a movement of the slider. Fig. 1 illustrates such a case in which a slider is displayed to provide the user with a category from a specific instance (this dog) to global classes (dogs, animals).

In an example, editing a graphical object can comprise: resizing the graphical object, for example, by using a pinch gesture; clipping the graphical object; changing a color of the graphical object; and setting a movement of a graphical object by using a motion vector.

For a static 3D object, an orientation of the static 3D object can be set when the static 3D object is placed in the graphical scene.

In an example, the method can further comprise: setting one of a plurality of graphical objects as a background of the graphical scene, wherein after the user selects a graphical object as the background image of the graphical scene, the user can use various manners, for example, a "pinch" gesture, to maximize the selected graphical object to cover the entire scene, and then the user can further depict the background image of the graphical scene as desired.

Optionally, when the user wants to extract a graphical object to be present in the target graphical scene, he can enter a keyword or a keyword chain relevant to the graphical object or importing an image of the graphical object into an image retrieval engine to make a retrieval request.

Optionally, when the user edits one of the pluralities of the graphical objects, the graphical scene which is being composed can be displayed in real time for the user to adjust the components appearing in the graphical scene at any moment.

In an example, the level of the generality of the category can be changed in a discrete mode or in a continuous mode; and then all the graphical objects comprised in the category at the specified level of the generality are displayed for the user to select an appropriate graphical object as the graphical object to be extracted.

Optionally, the graphical objects in the graphical database can be classified into at least three categories: living objects (such as actors, animals, plants...), non-living objects (such as vehicles, furniture, buildings...) and environment objects (i.e., the background of the graphical scene where the scene takes place, e.g., beach, swimming pool...).

In an example, the graphical objects in the graphical database can be related to different kinds of indexes for different kinds of retrievals, and the indexes can be related to specific instances of graphical objects, classes of graphical objects, or other properties of graphical objects, such as motions of the graphical objects. On the basis of the indexes, the user can retrieve the graphical database by an image retrieval engine to search the graphical objects similar to the graphical object to be extracted.

As discussed above, the inventive concept of the present principle mainly consists in: from the user's mental representation of a targeted graphical scene, decomposing the targeted graphical scene into a plurality of graphical objects to be presented in the graphical scene, that is, decomposing a request for searching the graphical scene to be drawn by the user into a series of sub-requests each for retrieving a graphical object or a background; then, searching and selecting suitable index files for each sub-request to provide the user with an appropriate graphical object, and finally compositing the targeted graphical scene with the provided graphical objects and searching the video contents close to the targeted graphical scene.

According to one aspect of the present disclosure, it is proposed a device configured to implement the method as discussed above.

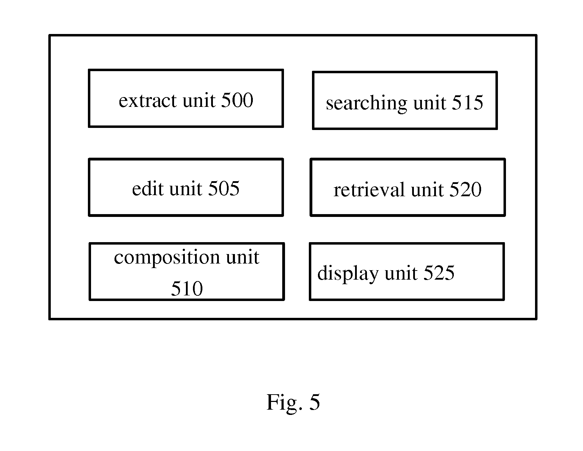

Optionally, as shown in Fig. 5, the device can comprise: an extract unit 500 configured to extract a plurality of graphical objects from a graphical database; an edit unit 505 configured to edit each of the plurality of graphical objects; a composition unit 510 configured to compose a graphical scene by the edited plurality of graphical objects; and a searching unit 515 configured to search the video contents based on the composed graphical scene.

Optionally, the device can further comprise: a retrieval unit 520 configured to, in response to a request from a user for extracting a graphical object, retrieve the graphical database to provide a category comprising a group of graphical objects which are similar to the graphical object; and a display unit 525 configured to display the group of the graphical objects for the user to select a graphical object as the graphical object to be extracted.

Optionally, the device can further comprise a specifying unit 530 configured to specify the level of the generality of the category in a discrete mode or in a continuous mode, and the display unit 525 can be further configured to display all the graphical objects comprised in the category at the specified level of the generality.

Optionally, the device can further comprise an input unit 535 configured to input a keyword or a keyword chain relevant to the graphical object to be extracted or importing an image thereof to make the request.

Compared to the previous QVE techniques, the method and the device according to the embodiments of the present disclosure can facilitate composing a targeted graphical scene as close as possible to the user's mental representation and avoid ambiguous sketches due to the user's unskilled free-hand drawing, and can reduce the time invested by the user to draw sketches and thus improve the efficiency of the video content retrieval; at the same time, it is easy to set a graphical object as a foreground/background of the graphical scene for example by a "pinch" gesture, and thus the vivid environment of the scene can be created by the user.

According to a variant of the embodiment, it shall be noted the disclosure can be applied for other types of content, e.g. image searching, besides video content searching.

The embodiments of the invention being thus described, it will be obvious that all the embodiments may be varied in many ways. Such variations should not be regarded as a departure from the scope of the invention, and all such modifications as would be obvious to those skilled in the art are intended to be included within the scope of the following claims.

## Claims

1. A method for searching for at least one content, **characterized by** comprising:
extracting (S300) at least one graphical object from a graphical database;
composing (S310) a graphical scene by using the at least one graphical object; and
searching (S315) for the at least one content based on the graphical scene.

2. The method of claim 1, further comprising:
in response to a request from a user for extracting a graphical object, retrieving (S400) in the graphical database to provide a group of graphical objects which are similar or identical to the graphical object; and
displaying (S405) the group of the graphical objects for the user to select a graphical object as the graphical object to be extracted.

3. The method of claim 2, further comprising:
specifying the level of the generality for the group of graphical objects; and
displaying graphical objects in the group of graphical objects meeting the level of the generality.

4. The method of the claim 1, further comprising:
editing (S305) the at least one graphical object.

5. The method of the claim 4, wherein said editing comprises at least one of:
resizing a graphical object, clipping a graphical object, changing a color of a graphical object, setting a movement of a graphical object, arranging an orientation of a graphical object, and setting one of the at least one graphical object as a background of the graphical scene.

6. The method of any one of claims 1-5, wherein the graphical objects in the graphical database are related to different kinds of indexes for different kinds of retrievals, said indexes representing specific instances of the graphical objects, classes of the graphical objects, or other properties of the graphical objects.

7. A device for searching for at least one content, **characterized by** comprising:
an extract unit (500) configured to extract at least one graphical object from a graphical database;
a composition unit (510) configured to compose a graphical scene by using the at least one graphical object; and
a searching unit (515) configured to search for the at least one content based on the graphical scene.

8. The device of claim 7, further comprising:
a retrieval unit(520) configured to, in response to a request from a user for extracting a graphical object, retrieve in the graphical database to provide a group of graphical objects which are similar or identical to the graphical object; and
a display unit (525) configured to display the group of the graphical objects for the user to select a graphical object as the graphical object to be extracted.

9. The device of claim 8, further comprising:
a specifying unit (530) configured to specify the level of the generality for the group of graphical objects,
wherein the display unit (525) is further configured to display graphical objects in the group of graphical objects meeting the level of the generality.

10. The device of the claim 7, further comprising:
an edit unit (505) configured to edit each of the plurality of graphical objects;

11. The device of the claim 10, wherein said editing comprises at least one of:
resizing a graphical object, clipping a graphical object, changing a color of a graphical object, setting a movement of a graphical object, arranging an orientation of a graphical object, and setting one of the at least one graphical object as a background of the graphical scene.

12. The device of any one of claims 7-11, wherein the graphical objects in the graphical database are related to different kinds of indexes for different kinds of retrievals, said indexes representing specific instances of the graphical objects, classes of the graphical objects, or other properties of the graphical objects.

13. Computer program product downloadable from a communication network and/or recorded on a medium readable by computer and/or executable by a processor, comprising program code instructions for implementing the steps of a method according to at least one of claims 1 to 7.

14. Non-transitory computer-readable medium comprising a computer program product recorded thereon and capable of being run by a processor, including program code instructions for implementing the steps of a method according to at least one of claims 1 to 7.
